# FASCICULE DE BREVET EUROPEEN

(11) **EP 2 878 868 B1**
(45) Date de publication et mention de la délivrance du brevet: **09.08.2017**
(21) Numéro de dépôt: 14194803.4
(22) Date de dépôt: 25.11.2014
(51) Int. Cl.: F16K 15/02

(54) **Vanne à clapet thermique optimise**
Optimiertes thermisches Absperrventil
Valve with optimised thermal shutter

(30) Priorité: 28.11.2013 FR 1361757
(43) Date de publication de la demande: 03.06.2015
(73) Titulaire: General Electric Technology GmbH, 5400 Baden (CH)
(72) Inventeur: Pierres, Emilien, 69001 LYON (FR); Toquet, Nicolas, 73160 SAINT THIBAUD DE COUZ (FR); Ledru, Roger, 38230 TIGNIEU (FR)
(74) Mandataire: Cleary, Fidelma

(56) Documents cités:
- GB-A- 712 833
- US-A1- 2010 326 958
- US-B1- 6 457 952

## Description

### DOMAINE TECHNIQUE

L'invention propose une valve à clapet thermique pour une chambre de coupure d'un disjoncteur haute ou moyenne tension.

L'invention propose plus particulièrement une valve à clapet thermique pour laquelle la surface d'appui du gaz diélectrique est optimisée pour améliorer la réactivité et l'étanchéité de la valve.

### ÉTAT DE LA TECHNIQUE ANTÉRIEURE

Une valve à clapet thermique pour une chambre de coupure d'un disjoncteur haute ou moyenne tension comporte principalement un corps percé d'orifices de passage, au travers desquels un gaz diélectrique sous pression est destiné à circuler, pour passer depuis une chambre de compression volumique vers une chambre de compression thermique.

La valve à clapet comporte aussi un clapet monté mobile par rapport au corps entre une position d'obturation des orifices et une position de non obturation des orifices, en fonction de la différence entre les pressions qui règnent de chaque côté du clapet.

Le clapet comporte une face amont d'appui située du côté de la chambre de compression volumique, sur laquelle le gaz présent dans la chambre de compression volumique exerce une pression, et qui vient en contact contre une face d'appui en vis-à-vis du corps. Le clapet comporte aussi une face aval située du côté de la chambre de compression thermique, sur laquelle le gaz présent dans la chambre de compression thermique exerce une pression.

Lorsque le clapet est en position de fermeture des orifices, le gaz diélectrique présent dans la chambre de compression volumique n'est en contact qu'avec une partie de la face amont d'appui qui est située en face des orifices. Le reste de la face amont d'appui est en contact et presse contre la face d'appui du corps.

Par conséquent, l'effort résultant de la pression de gaz sur la face amont d'appui est défini en fonction de la section des orifices.

Lorsque la pression de gaz diélectrique présent dans la chambre de compression volumique sur la face amont d'appui du clapet est suffisamment importante pour provoquer le déplacement du clapet vers sa position de non obturation des orifices, le clapet se déplace axialement pour ne plus venir en contact avec la face d'appui du corps.

Le gaz se répartit alors sur toute la superficie de la face amont d'appui du clapet.

L'effort résultant de la pression du gaz sur la face amont d'appui du clapet est alors augmentée fortement et rapidement. Le clapet se déplace alors brusquement vers la position de non obturation des orifices.

Un tel déplacement brusque du clapet peut provoquer des détériorations mécaniques de la vanne, du clapet ou de son système de guidage.

L'invention a pour but de proposer une vanne à clapet thermique qui est réalisée de manière à limiter la différence des actions du gaz situé du côté amont du clapet, sur le clapet entre la position d'obturation des orifices et le début du décollement du clapet d'avec le corps principal. Le document GB712833A décrit une valve à clapet conforme au préambule de la revendication 1.

### EXPOSÉ DE L'INVENTION

L'invention propose une valve à clapet thermique pour une chambre de coupure d'un disjoncteur haute ou moyenne tension comprenant
un corps s'étendant dans un plan radial par rapport à un axe principal de la chambre de coupure, dans lequel une pluralité d'orifices axiaux débouchant sont formés
au moins un clapet d'obturation des orifices, qui est apte à obturer simultanément les orifices, et qui comporte une face d'appui qui est apte à venir en contact axialement contre une face d'appui en vis-à-vis du corps,
caractérisée en ce que une portion de la face d'appui du corps, qui est située au niveau de la portion du corps située entre lesdits deux orifices adjacents, est située axialement à distance d'une portion de la face d'appui du clapet en vis-à-vis.

Cette distance entre les portions des faces d'appui en vis-à-vis permet d'augmenter la surface du clapet qui est en contact avec le gaz et ainsi améliorer la réactivité de la valve à clapet.

De préférence, au moins l'une de la portion de la face d'appui du corps et de la portion de la face
d'appui du clapet comporte un renfoncement axial dont le fond est situé axialement à distance de la face d'appui en vis-à-vis.

De préférence, le renfoncement est réalisé sur une portion de la face d'appui du corps associée à ladite portion du corps.

De préférence, le renfoncement est réalisé sur la face d'appui du clapet.

De préférence, les orifices sont répartis le long d'un cercle centré sur l'axe principal de la chambre et le clapet est de forme annulaire centré sur l'axe principal de la chambre et est apte à obturer simultanément tous les orifices.

De préférence, le renfoncement est en forme de gorge annulaire centrée sur l'axe principal de la chambre, ouverte axialement vers l'amont.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une vanne à clapet thermique selon l'art antérieur ;
- la figure 2 est une vue en coupe à plus grande échelle de la vanne à clapet représentée à la figure 1, montrant plus précisément le renfoncement de la face d'appui du corps ;
- la figure3 est une représentation schématique d'une vanne à clapet thermique selon l'invention ;
- la figure 4 est une vue en coupe à plus grande échelle de la vanne à clapet représentée à la figure 3, montrant plus précisément le renfoncement de la face d'appui du clapet.

### EXPOSÉ DÉTAILLÉ DE MODES DE RÉALISATION PARTICULIERS

On a représenté aux figures une valve à clapet thermique 10 pour une chambre de coupure d'un disjoncteur de ligne haute ou moyenne tension.

La valve à clapet thermique 10 est destinée à être montée entre deux volumes de la chambre de coupure, par exemple entre une chambre de compression volumique située d'un côté amont, ici à gauche des figures, et une chambre de compression thermique située d'un côté aval de la valve à clapet. La valve à clapet 10 a pour but de raccorder ou non ces deux chambres de compression selon que la pression de gaz diélectrique dans la chambre de compression située du côté amont est supérieure ou non à la pression de gaz dans la chambre de compression située du côté aval.

La valve à clapet thermique 10 comporte un corps principal 12 qui est ici de forme principale annulaire dont l'axe principal A est coaxial à l'axe principal de la chambre de coupure dans laquelle la valve à clapet 10 est montée.

Le corps annulaire 12 est prolongé axialement par un conduit central tubulaire 14 qui est destiné à être traversé par des composants mobiles de la chambre de coupure.

Le corps annulaire 12 comporte des orifices 16 mettant en communication les deux chambres de compression.

Chaque orifice 16 est ici de forme oblongue et s'étend sur un arc de cercle centré sur l'axe principal A de la valve à clapet thermique 10. Tous les orifices sont ici répartis autour de l'axe principal A sur un même cercle et forment des segments du cercle.

Le corps annulaire 12 comporte une portion de liaison radiale 18 séparant deux orifices 16 adjacents.

Ici, le corps annulaire comporte trois orifices 16 et trois portions de liaison radiales 18. Il sera compris que le corps 12 peut comporter un nombre différent d'orifices 16 et de portions de liaison 18 sans sortir de l'invention. Aussi, les orifices 16 et les portions de liaison 18 peuvent être situés à des cotes radiales différentes.

La valve à clapet thermique 10 comporte aussi un clapet 20 d'obturation des orifices 16, qui s'étend dans un plan radial par rapport à l'axe principal A de la valve à clapet thermique 10 et qui est apte à venir en contact contre une face d'appui 12a du corps 12 située en vis-à-vis.

Le clapet 20 est ici apte à obturer simultanément tous les orifices 16, il est ainsi de forme annulaire centré sur l'axe principal A de la valve à clapet 10 et sa dimension radiale est supérieure à la dimension radiale de chaque orifice 16.

Par conséquent, le clapet 20 est apte à venir en contact contre la partie de la face d'appui 12a du corps 12 qui entoure les orifices 16.

Selon une variante de réalisation, le clapet 20 est apte à obturer simultanément deux orifices 16 adjacents, la valve à clapet 10 comporte ainsi plusieurs clapets 20 dont chacun vient en appui contre la partie de la face d'appui 12a du corps 12 qui entoure les orifices 16 qu'il obture.

Ici, la face d'appui 12a du corps 12 contre laquelle le clapet 20 est en appui est une face aval du corps 12, qui est situé du côté droit des figures.

Le clapet comporte une face d'appui 20a qui est située en vis-à-vis de la face d'appui 12a du corps 12 et qui est destiné à venir en contact contre cette face d'appui 12a lorsqu'il obture les orifices 16.

La valve à clapet thermique 10 comporte enfin des pions 22 de guidage du clapet 20 en translation par rapport au corps 12, qui limitent la course en translation du clapet 20. Chaque pion 22 comporte un corps cylindrique 24 parallèle à l'axe principal A du corps, qui traverse un orifice 32 réalisé dans le clapet 20 et une tête 26 contre laquelle le clapet 20 est en butée axialement lorsqu'il est dans sa position de non obturation des orifices 16.

Chaque pion est fixé au corps 12 et il est monté au niveau d'une portion de liaison 18.

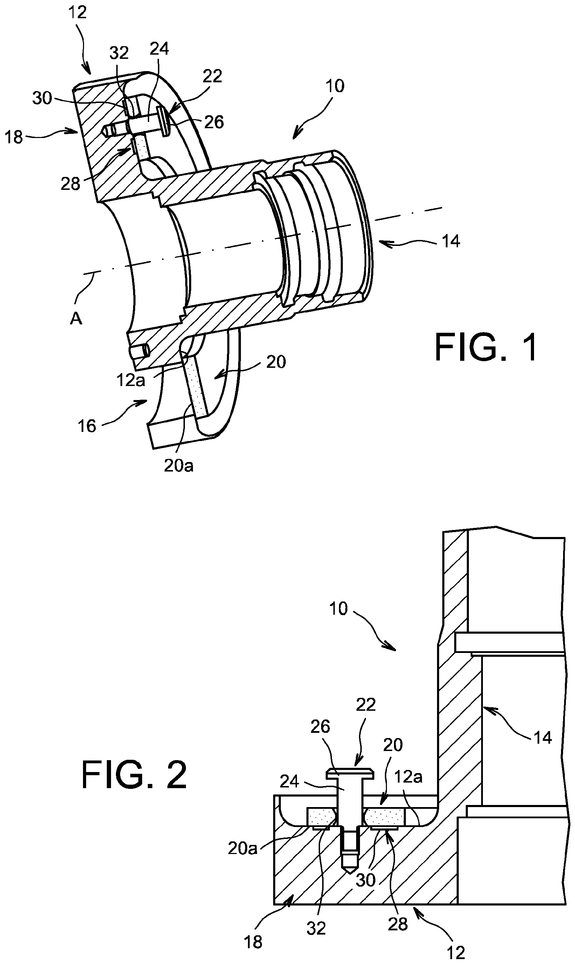

Selon le mode de réalisation représenté aux figures 1 et 2, une partie de la surface d'appui 12a du corps 12 comporte un renfoncement axial 28, dont le fond 30 du renfoncement 28, qui est situé axialement en vis-à-vis de la face d'appui 20a du clapet 20, est situé axialement à distance de la face d'appui 20a du clapet.

Comme on peut le voir plus en détails à la figure 2, le renfoncement 28 n'est formé que dans une partie de la surface d'appui 12a du corps qui est associée à la portion de liaison 18, le renfoncement entourant globalement le pion 22. Cette réalisation du renfoncement 28 autour du pion 22 permet de former une surface annulaire d'appui du clapet 20 contre la face d'appui 12a du corps 12 garantissant une étanchéité malgré la présence de l'orifice 32. Cela permet aussi de limiter la déformation du clapet 20 lorsqu'il est en appui contre la face d'appui 12a du corps 12.

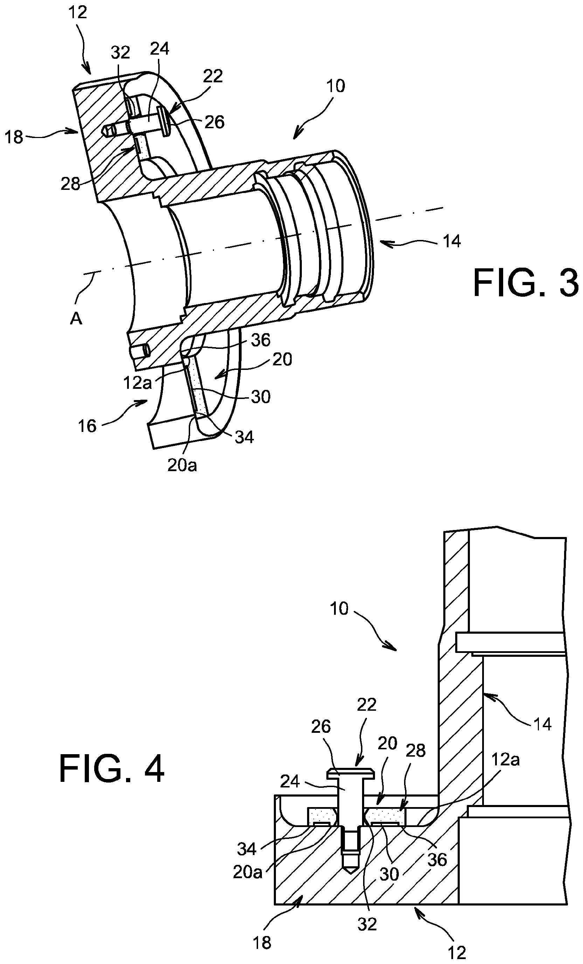

Selon un deuxième mode de réalisation de l'invention, représenté aux figures 3 et 4, le renfoncement 28 est formé dans la face d'appui 20a du clapet 20.

Ici, le renfoncement 28 se présente sous la forme d'un évidement globalement annulaire, dont le fond 30 est situé axialement en retrait de la face d'appui 20a du clapet 20.

Le renfoncement 28 s'étend en partie en face de chaque portion de liaison 18 du corps.

Le renfoncement 28 est interrompu au niveau de l'orifice 32 du clapet 20, pour renforcer localement l'étanchéité entre le clapet 20 et le corps 12.

La face d'appui 20a du clapet 20 comporte ainsi une portion circulaire externe 34 et une portion circulaire interne 36 coaxiales, qui viennent en appui contre la face d'appui 12a du corps 12.

Quel que soit le mode de réalisation, le renfoncement axial 28 permet au gaz contenu dans le volume situé en amont de la valve à clapet, c'est-à-dire du côté gauche des figures, d'exercer une pression sur une portion de la face d'appui 20a du clapet dont la superficie correspond à la superficie des orifices 16 additionnée de la superficie des renfoncements axiaux 28, lorsque le clapet est en position d'obturation des orifices 16.

La pression de gaz nécessaire pour provoquer le déplacement du clapet 20 vers une position de non obturation des orifices 16 est donc moins importante que lorsque la pression de gaz n'est exercée que sur une surface correspondant à la somme des superficies des orifices 16 uniquement.

Aussi, la différence entre la pression de gaz sur la face d'appui 20a du clapet 20 qui est nécessaire pour provoquer le déplacement du clapet 20, et la pression sur l'autre face du clapet 20, est plus faible que selon l'état de la technique. Cela permet d'améliorer la réactivité de la valve à clapet (10).

Aussi, de par la présence du renfoncement axial 28, le contact entre la face d'appui 20a du clapet 20 et la face d'appui 12a du corps est limité globalement aux bords circulaires radialement internes et externes de la face d'appui 20a du clapet 20.

Cela permet en outre de concentrer l'effort d'appui du clapet 20 sur le corps 12 sur une surface moindre, améliorant par conséquent l'étanchéité de l'obturation des orifices 16.

## Revendications

1. Valve à clapet thermique (10) pour une chambre de coupure d'un disjoncteur haute ou moyenne tension comprenant
un corps (12) s'étendant dans un plan radial par rapport à un axe principal de la chambre de coupure, dans lequel une pluralité d'orifices (16) axiaux débouchant sont formés
au moins un clapet d'obturation (20) des orifices (16), qui est apte à obturer simultanément au moins deux orifices (16) adjacents, et qui comporte une face d'appui (20a) qui est apte à venir en contact axialement contre une face d'appui (12a) en vis-à-vis du corps (12),
dans laquelle une portion de la face d'appui (12a) du corps (12), qui est située au niveau d'une portion (18) du corps (12) située entre lesdits deux orifices (16) adjacents, est située axialement à distance d'une portion de la face d'appui (20a) du clapet (20) en vis-à-vis,
et dans laquelle au moins l'une de la portion de la face d'appui (12a) du corps (12) et de la portion de la face d'appui (20a) du clapet (20) comporte un renfoncement (28) axial dont le fond (30) est situé axialement à distance de la face d'appui (12a, 20a) en vis-à-vis,
**caractérisée en ce que** le renfoncement (28) est réalisé sur la face d'appui (20a) du clapet (20).

2. Valve à clapet thermique (10) selon la revendication précédente, **caractérisée en ce que** les orifices (16) sont répartis le long d'un cercle centré sur l'axe principal A du corps (12) et le clapet (20) est de forme annulaire centré sur l'axe principal A du corps (12) et est apte à obturer simultanément tous les orifices (16).

3. Valve à clapet thermique (10) selon la revendication précédente, **caractérisée en ce que** le renfoncement (28) est en forme de gorge annulaire centrée sur l'axe principal A du corps (12), ouverte axialement vers l'amont.

## Patentansprüche

1. Wärmeklappenventil (10) für eine Unterbrechungskammer eines Hoch- oder Mittelspannungstrennschalters, umfassend:
einen Körper (12), der sich in einer Radialebene in Bezug zu einer Hauptachse der Unterbrechungskammer erstreckt, in dem eine Vielzahl von durchgehenden Axialöffnungen (16) ausgebildet sind,
mindestens eine Verschlussklappe (20) der Öffnungen (16), die geeignet ist, gleichzeitig mindestens zwei aneinandergrenzende Öffnungen (16) zu verschließen, und die eine Auflagefläche (20a) umfasst, die geeignet ist, axial an einer Auflagefläche (12a) gegenüber dem Körper (12) zur Anlage zu gelangen,
bei dem ein Abschnitt der Auflagefläche (12a) des Körpers (12), der sich im Bereich eines Abschnitts (18) des Körpers (12) befindet, der zwischen den zwei aneinandergrenzenden Öffnungen (16) liegt, axial in einem Abstand zu einem Abschnitt der Auflagefläche (20a) der gegenüberliegenden Klappe (20) angeordnet ist,
und bei dem mindestens einer des Abschnitts der Auflagefläche (12a) des Körpers (12) und des Abschnitts der Auflagefläche (20a) der Klappe (20) eine axiale Verstärkung (28) umfasst, deren Boden (30) axial in einem Abstand zu der gegenüberliegenden Auflagefläche (12a, 20a) angeordnet ist,
**dadurch gekennzeichnet, dass** die Verstärkung (28) auf der Auflagefläche (20a) der Klappe (20) hergestellt ist.

2. Wärmeklappenventil (10) nach dem vorhergehenden Anspruch, **dadurch gekennzeichnet, dass** die Öffnungen (16) entlang eines auf die Hauptachse A des Körpers (12) zentrierten Kreises verteilt sind, und die Klappe (20) von ringförmiger Form ist, die auf die Hauptachse A des Körpers (12) zentriert ist, und geeignet ist, gleichzeitig alle Öffnungen (16) zu verschließen.

3. Wärmeklappenventil (10) nach dem vorhergehenden Anspruch, **dadurch gekennzeichnet, dass** die Verstärkung (28) die Form einer Ringnut hat, die auf die Hauptachse A des Körpers (12) zentriert und axial stromaufwärts offen ist.

## Claims

1. A thermal flap valve (10) for an arc chamber of a high or medium voltage circuit-breaker comprising
a body (12) extending in a radial plane in relation to a main axis of the arc chamber, wherein are formed a plurality of opening axial orifices (16)
at least one closing flap (20) of the orifices (16), which is capable of simultaneously closing at least two adjacent orifices (16), and which comprises a support surface (20a) which is capable of coming into contact axially against a support surface (12a) facing the body (12),
wherein a portion of the support surface (12a) of the body (12), which is located at a portion (18) of the body (12) located between said two adjacent orifices (16), is located axially away from a portion of the support surface (20a) of the valve (20) facing each other,
and wherein at least a portion of the support surface (12a) of the body (12) and the portion of the support surface (20a) of the valve (20) comprises an axial recess (28) whose bottom (30) is located axially away from the support surface (12a, 20a) facing each other,
**characterised in that** the recess (28) is produced on the support surface (20a) of the valve (20).

2. A thermal flap valve (10) according to the previous claim, **characterised in that** the orifices (16) are distributed along a circle centered on the main axis A of the body (12) and the valve (20) has annular shape centered on the main axis A of the body (12) and is capable of simultaneously closing all the orifices (16).

3. A thermal flap valve (10) according to the previous claim, **characterised in that** the recess (28) is shaped as an annular groove centered on the main axis A of the body (12), open axially upstream.
